Europäisches Patentamt

**European Patent Office**

**Office européen des brevets**

(11) Veröffentlichungsnummer: **0 053 287**
**B1**

(12) **EUROPÄISCHE PATENTSCHRIFT**

(45) Veröffentlichungstag der Patentschrift:
**30.05.84**

(51) Int. Cl.³: **E 04 H 7/30**, E 04 C 3/32

(21) Anmeldenummer: **81109216.2**

(22) Anmeldetag: **29.10.81**

(54) Gebäude, insbesondere Lagersilo für Schüttgut, Werkhalle oder dergleichen.

(30) Priorität: **02.12.80 DE 3045320**

(43) Veröffentlichungstag der Anmeldung:
**09.06.82 Patentblatt 82/23**

(45) Bekanntmachung des Hinweises auf die Patenterteilung:
**30.05.84 Patentblatt 84/22**

(84) Benannte Vertragsstaaten:
**AT BE CH FR GB IT LI LU NL SE**

(56) Entgegenhaltungen:
**BE - A - 694 416**
**CH - A - 603 959**
**DE - A - 1 434 855**
**FR - A - 2 322 991**

(73) Patentinhaber: **Ries, Werner, Liebersbacher Strasse 4,
D-6943 Birkenau (DE)**
Patentinhaber: **Cornelius, Wilhelm, Dr. Ing.,
Olbrichweg 23, D-6100 Darmstadt (DE)**

(72) Erfinder: **Ries, Werner, Liebersbacher Strasse 4,
D-6943 Birkenau (DE)**
Erfinder: **Cornelius, Wilhelm, Dr. Ing., Olbrichweg 23,
D-6100 Darmstadt (DE)**

(74) Vertreter: **Kempe, Wolfgang, Dr., Postfach 1273,
D-6800 Mannheim 1 (DE)**

**Beschreibung**

Die Erfindung bezieht sich auf ein Gebäude nach dem Oberbegriff des Anspruches 1.

Bei den bekannten Gebäuden werden die Stiele aus kurzen, meist nur 1 m langen Trägerstükken zusammengesetzt, die aus zwei sich gegenüberstehenden U-Profilschienen bestehen, die mit ebenen Trägerplatten verschraubt sind. Die Verschraubung der einzelnen Träger ist sehr zeitaufwendig und erfordert ein passgenaues Arbeiten. Mehrere derartiger Stielteilstücke müssen dann aufeinandergesetzt und verschweisst werden, wenn man die übliche Geschosshöhe, die beispielsweise bei Silos ca. 6 m beträgt, erreichen will.

An die einzelnen Trägerteilstücke werden die Zellenwände des Hochbehälters bildenden Spundwände stumpf aufgeschweisst. Die im unteren Bereich des Hochbehälters angeordneten Trägerteilstücke müssen stärker dimensioniert sein, als die im oberen Bereich angeordneten Trägerteilstücke, da sie eine grössere Belastung aufnehmen müssen. Bei den bekannten Lagersilos beispielsweise führt die Verstärkung der U-Profilträger im unteren Bereich des Hochbehälters zu einer Vergrösserung der Aussenabmessungen des Stieles, so dass die Länge der zwischen die Stiele eingeschweissten Spundwände von Stielteilstück zu Stielteilstück von unten nach oben zunimmt. Dies macht eine rationelle Arbeitsweise unmöglich, da jedes Spundwand-Teilstück auf eine andere Länge zugeschnitten werden muss.

Aus der DE-A 1 434 855 ist bereits ein Bauwerk bekannt, das aus Wellblechplatten besteht, die durch als tragende Säule ausgebildete Verbindungselemente zusammengefügt sind. Die Säulen können aus abgewinkelten Flachblechen bestehen, die unter schwalbenschwanzförmiger Überlappung zusammengefügt sind. Von Nachteil bei dieser Ausgestaltung ist, dass die Seitenwände bei dieser Säule aus Blechstreifen gebildet werden, deren Seitenkanten um einen Winkel bis zu 135° abgekantet werden müssen. Bei einer derart starken Abkantung liegt die Gefahr nahe, dass die Biegekante aufreisst. Da diese Biegekanten aber durch die innere Verkeilung der Säule mechanisch stark beansprucht werden, würde schon die geringste Rissbildung an einer Biegekante zur Zerstörung der entsprechenden Seitenwand und damit der gesamten Säule führen.

Schliesslich erscheint von weiterem Nachteil, dass die Aussenabmessungen der Säule beim Zusammenbau nicht auf ein vorgegebenes Mass justiert werden können. Weder das Ineinandergreifen der Abkantungen der vier die Seitenwände bildenden Blechstreifen, noch die Verkeilung dieser Blechstreifen bieten die Möglichkeit, die Aussenabmessungen der Säule und damit die Fixpunkte für die Befestigung der Wellblechplatten mit der erforderlichen Massgenauigkeit zu garantieren.

Der vorliegenden Erfindung liegt die Aufgabe zugrunde, den Aufbau des Gebäudes der eingangs beschriebenen Art so zu vereinfachen, dass das Gebäude unter wesentlicher Arbeitszeiteinsparung und mit hohem Automatisierungsgrund erstellt werden kann.

Diese Aufgabe wird erfindungsgemäss durch die Merkmale des kennzeichnenden Teiles des Anspruches 1 gelöst.

Bei dem erfindungsgemässen Gebäude ist im Gegensatz zu den bekannten Gebäuden eine Verschraubung der Profilträger nicht mehr erforderlich, so dass die passgenaue Herstellung von Gewindebohrungen entfällt. Die einzelnen Profilträger eines Stieles werden gegebenenfalls unter Zurhilfenahme eines Kranes ineinandergeschoben und durch die Bolzen gegeneinander verspannt. Die gesamte Anordnung kann grosse Toleranzen aufnehmen. Durch den Wegfall exakter Passarbeiten und die dadurch eröffnete Möglichkeit, das Gebäude in längeren Stielteilstücken aufzubauen, die bei einem Lagersilo beispielsweise einer Geschosshöhe entsprechen, kann das gesamte Gebäude in einem Bruchteil der Zeit erstellt werden, die für die Erstellung von Gebäuden der bekannten Art erforderlich ist.

Zweckmässige Weiterbildungen der Erfindung sind in den Unteransprüchen angegeben.

Die Erfindung wird nachfolgend anhand eines in der Zeichnung dargestellten Ausführungsbeispieles näher beschrieben und erläutert.

Es zeigen:
Figur 1 einen Querschnitt durch einen Stiel eines Lagersilos und

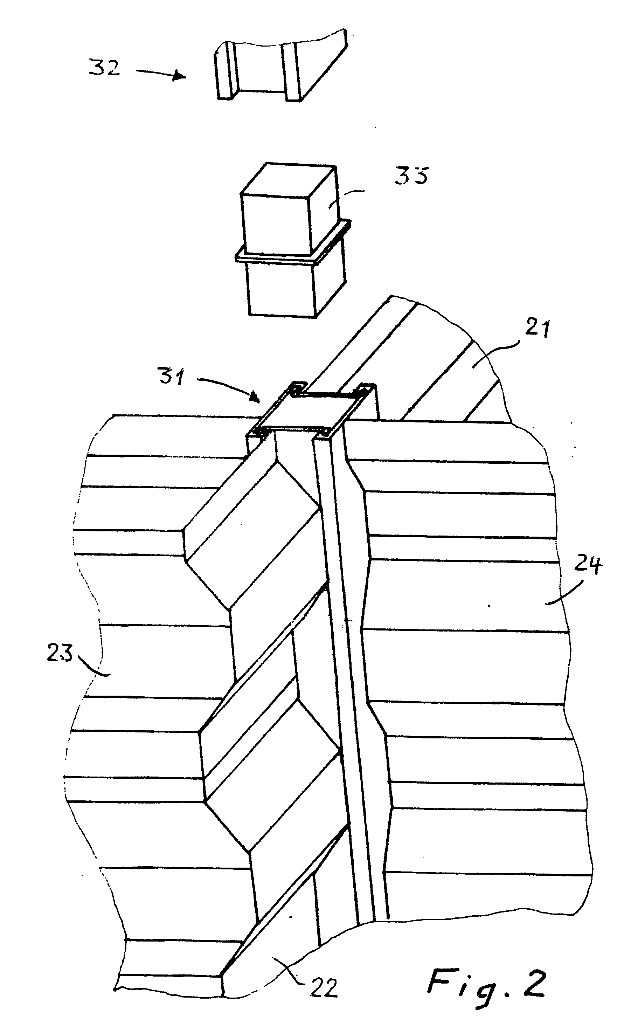

Figur 2 die Verbindung zweier Stielteilstücke in Explosionsdarstellung.

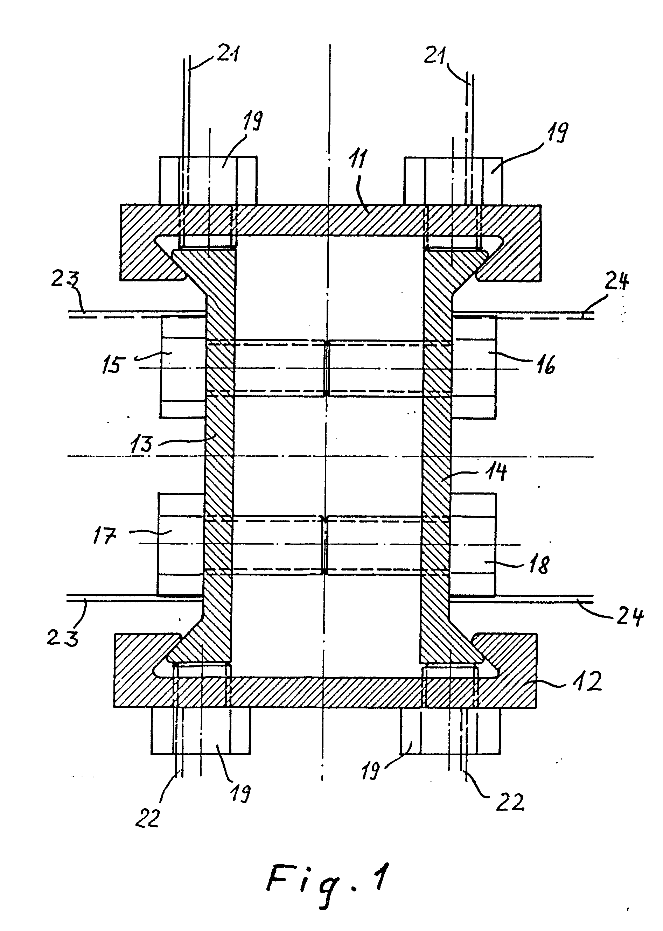

Der als Stützpfeiler eines Silo-Hochbehälters dienende Stiel gemäss Figur 1 weist zwei sich gegenüberstehende C-Profilträger 11 und 12 auf, deren C-Profil dem Inneren des Stieles zugewandt ist. In die Ecken der C-Profile dieser Profilträger 11 und 12 greifen zwei sich ebenfalls gegenüberstehende U-Profilträger 13 und 14 mit ihren angeschrägten Innenschenkeln ein. Die U-Profilträger 13 und 14 werden durch paarweise angeordnete Bolzen 15, 16 und 17, 18, die durch die U-Profilträger geschraubt sind und deren Stirnflächen zentrisch aufeinandertreffen, in die C-Profile der C-Profilträger 11 und 12 gedrückt, so dass die den Stiel bildenden vier Profilträger gegeneinander verspannt werden.

Damit der Stiel die erforderliche Biegesteifigkeit erhält, sind durch die C-Profilträger Schrauben 19 geschraubt, die mit ihrer Endfläche gegen die Aussenseiten der Schenkel der U-Profilträger 13 bzw. 14 drücken. Vorteilhafterweise kann man die Aussenseiten der Schenkel mit einer kegelförmigen Einsenkung zur Aufnahme der dann ebenfalls kegelförmig ausgebildeten Endfläche der Schrauben 19 versehen. Dadurch wird eine seitliche Führung der U-Profilträger 13 und 14 erreicht, die zu einer Stabilisierung des gesamten Stieles beiträgt.

An die Aussenseiten der Profilträger 11 bis 14 sind Spundwände 21 bis 24 stumpf angeschweisst, die die Zellenwände des Hochbehälters bilden. Die Länge der ein Stielteilstück bildenden Profilträger 11 bis 14 – und damit die Höhe der Spundwände 21 bis 24 – entspricht einer Geschosshöhe oder Schusshöhe des Lagersilos. Soll der Lagersilo mehrere Geschosse erhalten, so werden mehrere derartige Stielteilstücke 31 und 32 durch einen in die Stielteilstücke eingepassten Formkörper 33 verbunden. Der Formkörper 33 kann mit den Stielteilstücken 31 und 32 verschraubt werden. Er kann jedoch auch im Passsitz in den Stielteilstücken 31 und 32 verkeilt oder auf andere Weise mit diesen verbunden, insbesondere durch Laschen befestigt werden.

### Patentansprüche

1. Gebäude, insbesondere Lagersilo für Schüttgut, Werkhalle oder dergleichen in Form eines aus mehreren Zellen mit rechteckigem Querschnitt bestehenden Hochbehälters, wobei die Ecken der Zellen als die Stütz- und Biegemomente aufnehmende Stiele ausgebildet sind, die aus je vier schwalbenschwanzförmig ineinander greifenden, gegeneinander verspannten Seitenwänden bestehen und durch die Zellenwände bildende Spundwände miteinander verbunden sind, dadurch gekennzeichnet, dass zwei sich gegenüberstehende Seitenwände eines jeden Stieles aus C-Profilträgern (11 und 12) bestehen, in deren Innenseite zwei die beiden anderen sich gegenüberstehenden Seitenwände des Stieles bildende U-Profilträger (13 und 14) mit angeschrägten Innenschenkeln eingreifen, die mittels paarweise angeordneten und durch die U-Profilträger geschraubte Bolzen (15, 16 bzw. 17, 18), deren Stirnflächen zentrisch aufeinandertreffen, in die C-Profilträger drückbar sind, und dass durch die C-Profilträger (11 und 12) Schrauben (19) geschraubt sind, die mit ihrer Endfläche gegen die Aussenseite der Schenkel der U-Profilträger (13 und 14) drücken.

2. Gebäude nach Anspruch 1, dadurch gekennzeichnet, dass die Aussenseiten der Schenkel der U-Profilträger (13 und 14) vorzugsweise kegelförmige Vertiefungen zur Aufnahme der ebenfalls vorzugsweise kegelförmigen Endflächen der Schrauben (19) aufweisen.

3. Gebäude nach einem der Ansprüche 1 und 2, dadurch gekennzeichnet, dass übereinander gestellte, aus den Profilträgern (11 bis 14) zusammengesetzte Stielteilstücke (31 und 32) durch in die Stielteilstücke eingepasste Formkörper (33) verbunden sind und dass die Länge der Stielteilstücke vorzugsweise einer Geschosshöhe des Lagersilos entspricht.

4. Gebäude nach Anspruch 3, dadurch gekennzeichnet, dass der freie Innenraum des Stieles durch einen erstarrungsfähigen oder aushärtenden Werkstoff ausgefüllt ist.

5. Gebäude nach einem der vorhergehenden Ansprüche, dadurch gekennzeichnet, dass die Stärke der U-Profilträger (13, 14) im unteren Bereich des Gebäudes grösser ist als im oberen Bereich und nach innen zunimmt, so dass die Aussenabmessungen des Stieles über seine gesamte Länge gleich sind.

6. Gebäude nach Anspruch 5, dadurch gekennzeichnet, dass jeder Profilträger (11 bis 14) an seiner Aussenseite mit einer Spundwand (21 bis 24) verschweisst ist und dass sämtliche Spundwände die gleiche Breite aufweisen.

### Claims

1. Building, in particular a storage silo for bulk materials, a workshop hangar or the like, in the form of an upright container consisting of several cells of rectangular cross-section, the corners of the cells being made as posts which absorb the supporting and bending moments and which each consist of four mutually braced side walls in dovetail engagement and are connected to one another by sheeting walls forming the cell walls, characterised in that two mutually opposite side walls of each post consist of C-section beams (11 and 12), in the inside of which two U-section beams (13 and 14) engage, which form the other two mutually opposite side walls of the post and have chamfered inner legs and which can be pressed into the C-section beams by means of bolts (15, 16 and 17, 18) which are arranged in pairs and are screwed through the U-beams and the end faces of which meet centrally, and that screws (19), the end faces of which press against the outside of the legs of the U-section beams (13 and 14) are screwed through the C-section beams (11 and 12).

2. Building according to Claim 1, characterised in that the outsides of the legs of the U-section beams (13 and 14) preferably have conical recesses which are to receive the likewise preferably conical end faces of the screws (19).

3. Building according to one of Claims 1 to 2, characterised in that superposed post portions (31 and 32) assembled from the section beams (11 to 14) are connected by shaped pieces (33) fitting into the post portions, and that the length of the post portions preferably corresponds to the height of one storey of the storage silo.

4. Building according to Claim 3, characterised in that the free interior of the post is filled with a setting or curing material.

5. Building according to one of the preceding claims, characterised in that the thickness of the U-section beams (13, 14) is greater in the lower part of the building than in the upper part and increases inwards, so that the external dimensions of the post are constant over its entire length.

6. Building according to Claim 5, characterised in that each section beam (11 to 14) is welded on its outside to a sheeting wall (21 to 24) and that all the sheeting walls have the same width.

### Revendications

1. Bâtiment, en particulier, un silo d'entreposage pour produits en vrac, un atelier ou analogues sous forme d'un réservoir surélevé constitué de plusieurs cellules à section transversale rectangulaire, les coins des cellules étant réalisés sous forme de montants absorbant les moments de support et de flexion, ces montants étant constitués chacun de quatre parois latérales serrées l'une contre l'autre en s'engageant l'une dans l'autre en forme de queue d'aronde, tandis qu'ils sont assemblés l'un à l'autre par des palplanches formant les parois des cellules, caractérisé en ce que deux parois latérales mutuellement opposées de chaque montant sont constituées de poutres profilées en C (11 et 12) dans la face intérieure desquelles viennent s'engager deux poutres profilées en U (13 et 14) formant les deux autres parois latérales opposées du montant et ayant des ailes intérieures inclinées qui peuvent être pressées dans les poutres profilées en C au moyen de boulons (15, 16 ou 17, 18) disposés par paires, vissés à travers les poutres profilées en U et dont les faces frontales se rencontrent en leur centre tandis que, à travers les poutres profilées en C (11 et 12), sont vissées des vis (19) qui sont pressées, par leur face en bout, contre la face extérieure des ailes des poutres profilées en U (13 et 14).

2. Bâtiment suivant la revendication 1, caractérisé en ce que les faces extérieures des ailes des poutres profilées en U (13 et 14) comportent des cavités, de préférence, coniques destinées à recevoir les faces en bout des vis (19), ces faces étant également, de préférence, coniques.

3. Bâtiment suivant une des revendications 1 et 2, caractérisé en ce que des tronçons de montants (31 et 32) superposés et assemblés à partir des poutres profilées (11 à 14) sont reliés par des corps façonnés (33) venant s'adapter à l'intérieur de ces tronçons de montants, tandis que la longueur de ces derniers correspond, de préférence, à une hauteur d'étage du silo d'entreposage.

4. Bâtiment suivant la revendication 3, caractérisé en ce que l'espace intérieur libre du montant est rempli d'une matière durcissante ou apte à la solidification.

5. Bâtiment suivant une des revendications précédentes, caractérisé en ce que l'épaisseur des poutres profilées en U (13, 14) est plus forte dans la partie inférieure du bâtiment que dans la partie supérieure et augmente vers l'intérieur, si bien que les dimensions extérieures du montant sont les mêmes sur toute sa longueur.

6. Bâtiment suivant la revendication 5, caractérisé en ce que, sur sa face extérieure, chaque poutre profilée (11 à 14) est soudée à une palplanche (21 à 24), toutes les palplanches ayant la même largeur.

Fig.1

32 →

35

31

21

24

23

22

*Fig.2*